# EUROPEAN PATENT APPLICATION

(11) **EP 2 626 812 A1**
(43) Date of publication of application: **14.08.2013**
(21) Application number: 12154568.5
(22) Date of filing: 08.02.2012
(51) Int. Cl.: G06K 7/00, G06K 19/07, H04B 5/02, H04B 5/00

(54) **Near field communication (NFC) accessory providing enhanced data transfer features and related methods**

(71) Applicant: Research In Motion Limited, Waterloo, ON N2L 3W8 (CA)
(72) Inventor: Han, Dian Ping, Mississauga, Ontario L4W 0B5 (CA)
(74) Representative: Fennell, Gareth Charles

(57) **Abstract**

An electronics system may include at least one first near field communication (NFC) device (30), a second NFC device (31) capable of storing data, and an NFC accessory (32). The NFC accessory (32) may be capable of receiving the data from the second NFC device (31) via NFC communication, sending the copied data to the at least one first NFC device (30) via NFC communication, and deleting the data after providing the data to the at least one first NFC device .

## Description

### Technical Field

This application relates to the field of communications, and more particularly, to electronic devices and related methods that use near field communication (NFC).

### Background

Some electronic and other device incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

### Brief Description of the Drawings

FIG. 1 is a schematic block diagram of an electronics system in accordance with one example embodiment.

FIG. 2 is a schematic block diagram of an example embodiment of the NFC accessory of the system of FIG. 1.

FIGS. 3 and 4 are schematic diagrams illustrating operation of the NFC devices and NFC accessory of the system of FIG. 1 in accordance with an example embodiment.

FIG. 5 is a flow diagram illustrating method aspects associated with the system of FIG. 1.

FIG. 6 is a schematic diagram illustrating example components that may be used with the NFC devices or NFC accessory of FIGS. 1-4.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, an electronics system is provided herein which may include at least one first near field communication (NFC) device, a second NFC device capable of storing data, and an NFC accessory. The NFC accessory may be capable of receiving the data from the second NFC device via NFC communication, sending the data to the at least one first NFC device via NFC communication, and deleting the data after providing the data to the at least one first NFC device. As such, the NFC accessory may advantageously provide for the convenient transfer of data between different NFC devices, yet while providing enhanced security, for example.

More particularly, the NFC accessory may comprise an elongate housing, and an NFC transceiver carried by the elongate housing. By way of example, the elongate housing may have a pointed tip so that the NFC accessory defines a stylus. The NFC accessory may also comprise a memory coupled with the NFC transceiver, and at least one battery coupled with the NFC transceiver and the memory. Moreover, the NFC accessory may further comprise a switch capable of selectively coupling the at least one battery to the NFC transceiver and the memory.

The NFC accessory may further include an input device capable of receiving an input for causing the device to delete the data. In addition, the NFC accessory may comprise a timer capable of deleting the copied data after a timeout period. By way of example, the at least one first NFC device may comprise at least one mobile communications device, and the second NFC device may comprise an NFC tag.

A related NFC accessory, such as the one described briefly above, and a related NFC method are also provided. The method may include sending the data from the second NFC device to a NFC accessory via NFC communication, sending the copied data from the NFC accessory to the at least one first NFC device via NFC communication, and deleting the data from the NFC accessory after providing the data to the at least one first NFC device.

A related computer-readable medium is also provided. The computer-readable medium may have computer executable instructions for causing an NFC accessory to perform steps including receiving data from a second NFC device to an NFC accessory via NFC communication, sending the data from the NFC accessory to the at least one first NFC device via NFC communication, and deleting the data from the NFC accessory after sending the data to the at least one first NFC device.

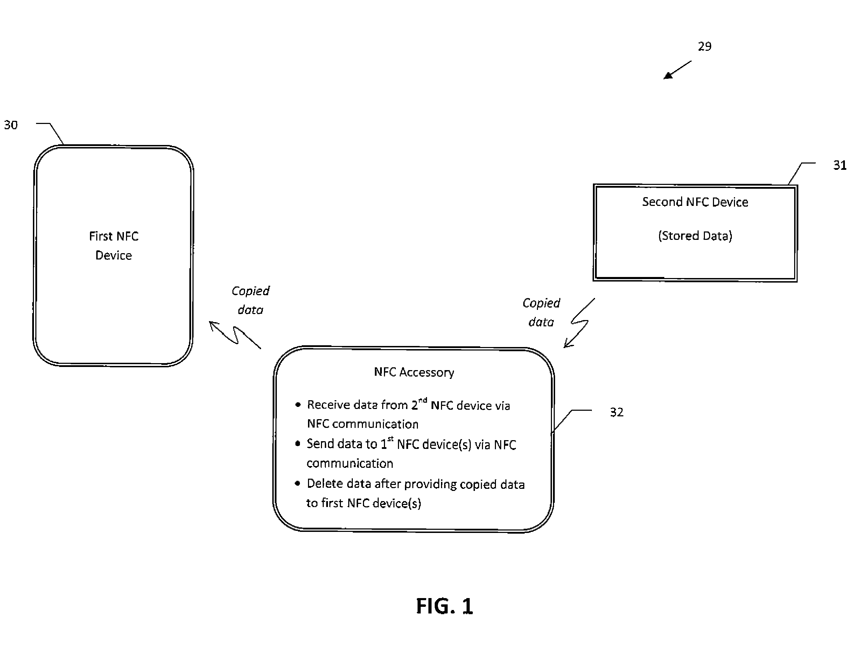

Referring initially to FIG. 1, an electronics system **29** illustratively includes one or more first near field communication (NFC) devices **30,** a second NFC device **31** capable of storing data (i.e., it may include one or more memories for storing data), and a NFC accessory **32.** By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

The one or more first NFC device **30** and the second NFC device **31** may take various forms, such as an NFC reader (e.g., an NFC security card reader or payment card reader, etc.), a NFC tag (e.g., a smart poster tag), as well as electronic devices such as computers or mobile communications devices (also referred to as a "mobile device" herein). Example mobile devices **31** may include portable or personal media players (e.g., music or MP3 players, video players, electronic book readers, etc.), portable gaming devices, portable or mobile telephones, smartphones, portable computers such as tablet computers and laptop computers, digital cameras, etc. Other types of NFC devices may include appliances, stereos, televisions, desktop computers, garage door openers, or other objects, and such objects need not necessarily be electrical or electronic devices. Moreover, it should also be noted that such devices need not necessarily have NFC functionality built in, rather they may be considered as a NFC device when a smart poster tag, etc., is positioned thereon.

In some circumstances it may be difficult, inconvenient, or awkward to physically swipe or position different types of devices in close proximity with one another. For example, for an NFC-enabled tablet computer, it may be relatively cumbersome to hold the tablet computer up to a wall to swipe an NFC tag, as this may require a user to set down other objects and use both hands to lift and hold the tablet computer up. In other circumstances, it may not be convenient for a user to swipe a mobile phone with a smart poster tag or reader terminal, for example, while on a phone call. Here again, it should be noted that, as used herein, an "NFC device" need not be a mobile electronic device, but may instead be an object such as a television, stereo, refrigerator, smart home appliance, etc., that may otherwise be difficult or inconvenience to reach with another NFC-enabled device, such as a tablet computer.

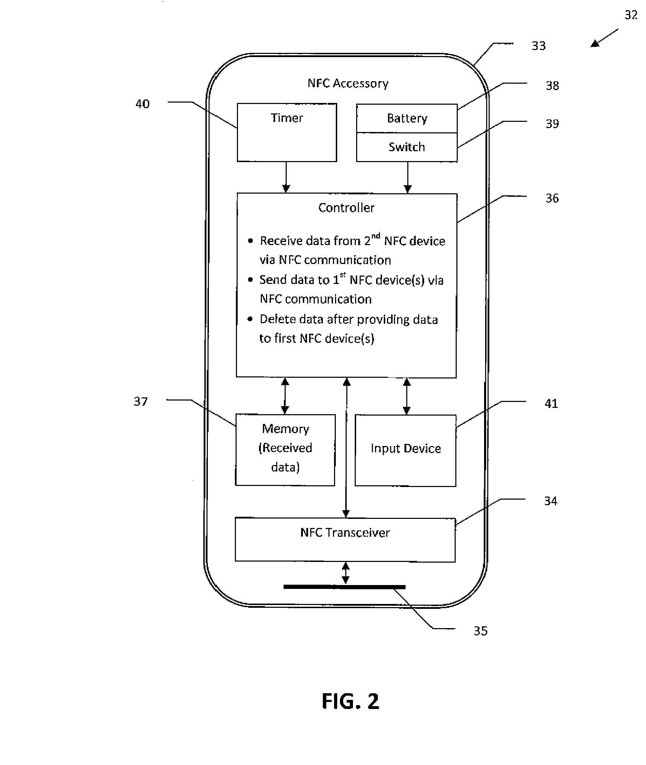

To advantageously address these and other similar situations where it may be inconvenient or impractical to swipe the first NFC device **30** with the second NFC device **31,** the NFC accessory **32** may include a token or other object that advantageously acts as an intermediate or intermediary "go-between" to copy or transfer data between the different NFC devices. Referring additionally to FIG. 2, in one example embodiment the NFC accessory **32** illustratively includes a housing **33,** an NFC transceiver **34** and associated NFC antenna **35,** a controller **36** coupled with the NFC transceiver **34,** and a memory **37** coupled with the controller **36.** By way of example, the NFC transceiver **34,** the antenna **35,** the controller **36,** and the memory **37** may be implemented as part of an NFC chipset. In some embodiments, the memory **37** may be configured as a secure element, although a secure memory configuration need not be used in all embodiments (or both types may be used). Generally speaking, a trusted service manager (TSM) is used to write or modify data in a NFC secure element. Thus, for typical data exchanges between NFC devices, a memory **37** which is not configured as a secure element may be used, although the data transfer and delete operations described herein may also be used with a secure element in some instances (such as when the NFC accessory **32** is used as an intermediary to a TSM provisioning terminal at a bank, etc.). In such embodiments, the NFC accessory **32** may be configured as a trusted device which is paired with the first NFC device **30** or the second NFC device **31.**

The controller **36** may be implemented using a combination of hardware (e.g., microprocessor, logic circuitry, etc.) and a computer-readable medium having computer-executable instructions for performing the various operations noted herein. The NFC accessory **32** in some embodiments may further include one or more batteries **38** and an associated switch **39** for coupling the battery to the other components of the NFC accessory **32.** The NFC accessory **32** also optionally includes a timer **40** coupled with the controller **36,** and an input device **41** also coupled with the controller.

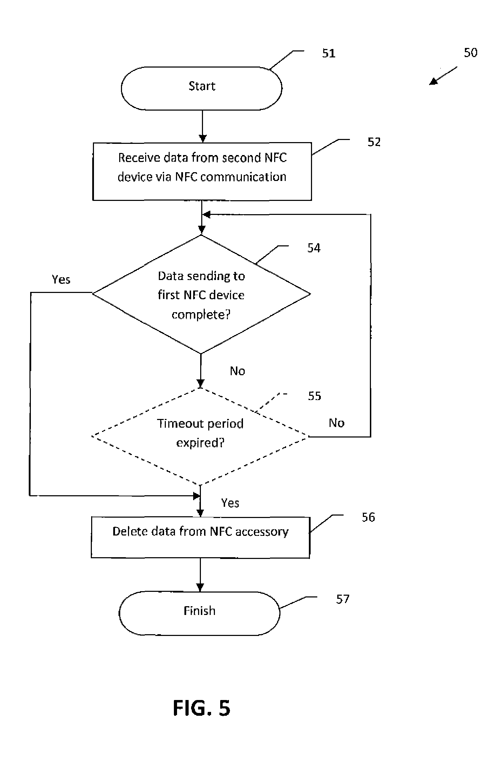

Referring additionally to the flow diagram **50** of FIG. 5, beginning at Block **51,** the NFC accessory **32** may be capable of receiving or copying data from the second NFC device **31** to the memory **37** via NFC communication, at Block **52,** and sending or providing the copied data to the first NFC device **30** via NFC communication. After the copied data has been sent to the first NFC device **30,** the controller **36** is further capable of or configured to delete or purge the copied data from the memory **37.** As such, the NFC accessory **32** may advantageously provide for the convenient transfer of data between different NFC devices, yet while providing enhanced security, for example. That is, an enhanced level of security may be provided for the transfer of private or sensitive data as the NFC accessory **32** may advantageously purge or delete this information from the memory **37** upon completion of the data copy or transfer operation. Thus, a subsequent loss or theft of the NFC accessory **32** would not result in a loss or compromise of the private or sensitive data.

It should be noted that not all data need be deleted from the memory **37** after each transfer. For example, an option may be provided to retain certain persistent data for an extended period, such as an electronic business card for the owner of the NFC accessory **32,** for example. That is, the memory **37** and controller **36** may be capable of selectively retaining some data following data transfers, while retaining other data that a user desires to keep for a longer period of time. The selective deleting of data may also be performed based upon data type. For example, copied data of a type that is considered to be secure (e.g., device MAC addresses, financial transaction data, etc.) may be automatically deleted upon completion of being provided to the first NFC device **30,** while less sensitive data (e.g., URLs) may be permitted to remain in the memory **37** after being provided to the first NFC device **30** (e.g., until the memory **37** gets full and data needs to be overwritten, etc.).

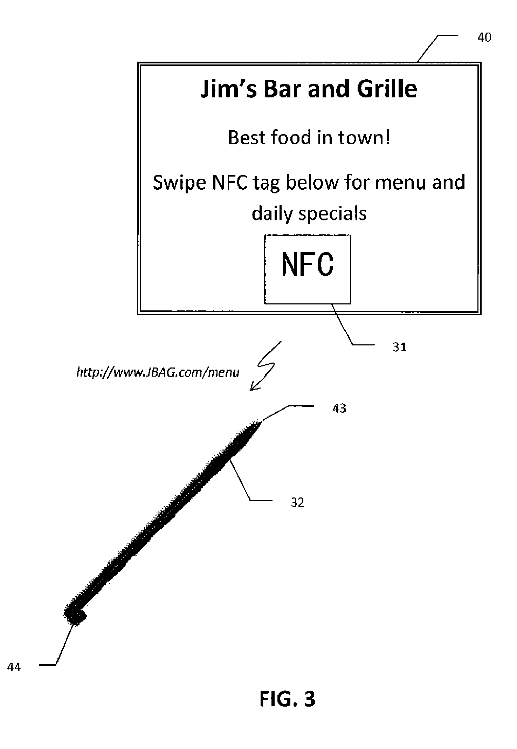

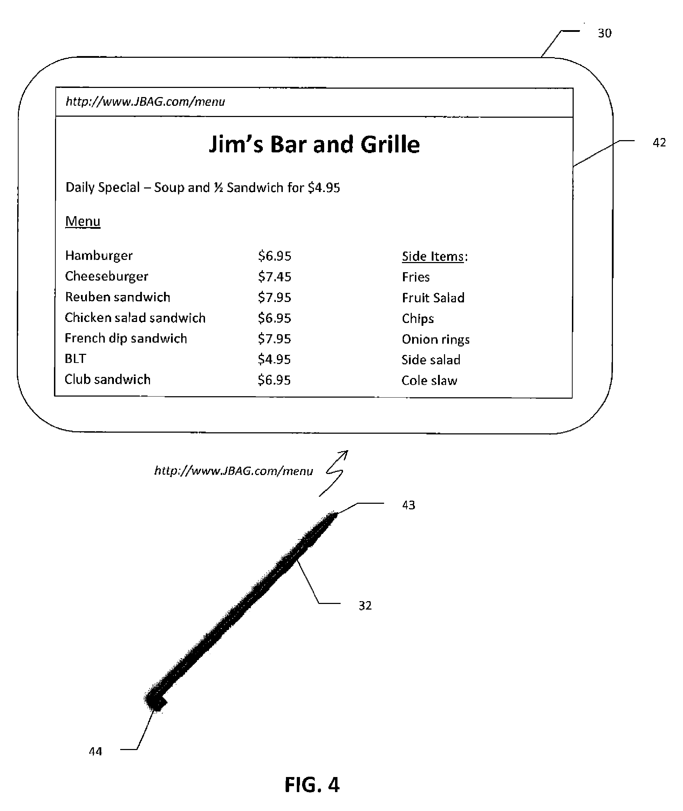

The foregoing will be further understood with reference to the example set forth in FIGS. 3 and 4. Here, the NFC accessory **32** has an elongated housing and a tip to define a stylus. In this regard, the stylus may appear as a "magic wand" that transfers data by tapping or swiping with one NFC device and then another NFC device. The stylus may be an accessory for the first NFC device, which in this example comprises a tablet computer. For example, in addition to transferring data to the first NFC device, the NFC accessory **32** may also be used for writing on a display **42** of the first NFC device **30.** In some embodiments, the first NFC device **30** may include a holder for the NFC accessory **32.** It should be noted that the NFC accessory **32** may have other form factors than a stylus in different embodiments. For example, the NFC accessory **32** may be in the shape of a card (e.g., similar to a business card or payment card), or may be implemented in other form factors such as a wallet, a key ring, fob, a mobile device, etc.

For NFC accessories **32,** such as a stylus with a relatively small and convenient form factor, the battery **38** of the NFC accessory may comprise one or more small battery cells, such as button battery cells (which may also be referred to as coin or watch battery cells). Moreover, since the stylus resembles a pen shape, the switch **39** may be a push button switch on an end **44** of the stylus opposite the point **43,** although other types and locations of the switch **39** may be used. In this way, the switch **39** may be pressed when it is desired to perform an NFC data transfer, which provides power from the battery **38** to the NFC transceiver **34,** the controller **36,** and the memory **37** to place the NFC accessory **32** in an appropriate mode (e.g., peer-to-peer (P2P) or read/write (R/W)) in which is will begin to scan for another NFC device, such as the second NFC device **31.** It should be noted, however, that the NFC accessory **32** need not include the battery **38** and switch **39** in some embodiments. That is, the NFC accessory **33** may be a passive device which operates in a card emulation (CE) mode, for example, and is powered by the field generated by an active NFC reader terminal, for example. Moreover, in some embodiments the controller **36** may selectively operate the NFC transceiver **34** in all of the above-noted modes (i.e., it may switch between one or more of P2P, R/W, and CE modes).

In the present example, the second NFC device **31** comprises a passive, smart poster NFC tag associated with a sign **40** for a restaurant named Jim's Bar and Grille. The sign **40** advises users to swipe the second NFC device **31** to obtain menu and daily special information for the restaurant. As such, the switch **39** may be pressed to "wake up" the controller **36** and place the NFC transceiver **34** in an active mode, so that when it is swiped with or moved in proximity to the second NFC device **31,** it will provide a field that powers the NFC device so that the NFC device will send the data stored thereon. In this case, the data comprises a hyperlink or uniform resource locator (URL) to a page on a website for the restaurant (i.e., "http://www.JBAG.com/menu") that includes the menu and daily special information. The hyperlink is copied and stored in the memory **37.** However, it should be noted that other types of data may be copied in other embodiments, such as electronic files (e.g., pictures, documents, music, videos, text, etc.), payment data, etc. Also, the data copied from the second NFC device **31** may include connectivity information for establishing a separate wireless connection (e.g., Bluetooth, wireless LAN, personal area network (PAN), zigbee, TransferJet, etc.) directly between the first NFC device **30** and the second NFC device **31.** Other example data that may be passed by the NFC accessory **32** includes security or credential data, such as for logging onto a computer, Website, etc. In some instances, the first NFC device **30** and the second NFC device **31** may be devices typically not considered as readily portable (e.g., desktop computers, servers, etc.), and the NFC accessory **32** may advantageously provide for a convenient transfer of data between such devices.

Accordingly, when the NFC accessory **32** is swiped, bumped, or otherwise brought in proximity to the first NFC device **30** (i.e., the tablet computer), the data that was copied into the memory **37** (i.e., the hyperlink) is sent or provided to the first NFC device **30.** This causes the first NFC device 30 to display the website page associated with the hyperlink in a browser window on the display **42,** as seen in FIG. 4. As a result, the user of the first NFC device **30,** which is shown as a tablet computer in this example, does not have to physically move the tablet computer in front of the second NFC device **31,** but instead may easily and conveniently move the relatively small and lightweight stylus between the second NFC device **31** and the first NFC device **30.**

Upon completion of sending or providing the data to the first NFC device **30,** the copied data may advantageously be deleted from the memory **37,** at Block **56,** concluding the method illustrated in FIG. 5 (Block **57**). This may be particularly advantageous in that it may keep others from obtaining sensitive or personal data if the NFC accessory **32** is lost or stolen. For example, this may be beneficial if the NFC accessory **32** is used for payment transactions, such as to transfer payment information between the first NFC device **30** and the second NFC device **31,** such as in a point-of-sale (POS) application. Deleting of the data may be accomplished in various ways. For example, the first NFC device **30** may notify or instruct the controller **36** when the data transfer is completed (Block **54**), and the controller may be configured or programmed to delete or delete the data from the memory **37** responsive to this notification or instruction.

In another example, the controller **36** may determine when the data transfer is complete and initiate the data delete of the memory **37** on its own. In accordance with another example, the data may be deleted responsive to user input. For example, the switch **39** may be actuated to power off the NFC accessory **32** after swiping with the first NFC device **30,** and the controller **36** may delete the memory **37** responsive to this actuation of the switch **39.** Similarly, in embodiments where the separate input device **41** is included, the input device may be used to prompt the controller **36** to delete the memory **37,** for example. The input device **41** may comprise a button switch or other suitable types of switches, for example.

In accordance with another advantageous aspect, in embodiments where the timer **40** is included, the controller **36** may cause the data stored in the memory **37** to be deleted after a timeout period, at Block **55.** This data delete may occur irrespective of whether the data has been successfully transferred to the first NFC device **30** or not. That is, a user may be given a certain amount of time to complete the data transfer, after which the data will be deleted. Here again, this may be advantageous with respect to security and privacy, in that sensitive or private data will be deleted within the timeout period so that loss or theft of the NFC accessory **42** is less likely to result in exposure of the data. The timeout period may also be used to shut down the NFC accessory **32** to conserve battery **38** power. In the case of a volatile memory **37,** the timeout shutdown of the NFC accessory **32** would also result in deleting of the memory **37** (i.e., by removing its power).

It should be noted that in some embodiments the NFC accessory **32** may transfer the copied data to more than one first NFC device **30** before the data is deleted from the memory **37.** For example, the NFC accessory **32** may be used to exchange an electronic business or contact card to multiple NFC-enabled devices during a meeting before deleting. Furthermore, the NFC accessory **32** may also be used to copy data from multiple second NFC devices **31,** and provide the copied data to one or more first NFC devices **30.** In addition, the NFC accessory **32** may also be used to pass information back to one or more second NFC devices **31,** either before or after deleting of the original copied data from the second NFC device from the memory **37.**

In some embodiments, the NFC accessory **32** processes the data received from the second NFC device **31** before the NFC accessory **32** sends the data to the first NFC device **30.** The processing of the data may include filtering a portion of the data (for example, removing malicious links). The processing of the data may include determining whether the first NFC device **30** is permitted to obtain the data as per a security policy.

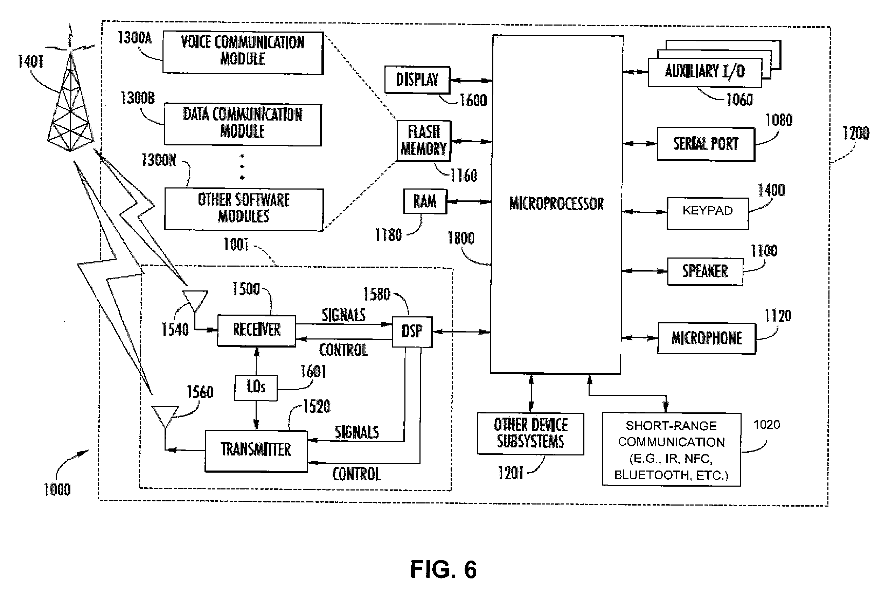

Example components of a mobile wireless communications device **1000** that may be used in accordance with the above-described embodiments are further described below with reference to FIG. 6. The device **1000** illustratively includes a housing **1200,** an optional keyboard or keypad **1400** and an output device **1600.** The output device shown is a display **1600,** which may include a full graphic LCD. In some embodiments, the display **1600** may have an array of touch sensors associated therewith to define a touch screen that may be used an input device. Various types of display technologies may be used, including three-dimensional (3D) displays, in some embodiments. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A**-**1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, wireless local area network (WLAN) or WiFi, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) communications module for communicating with a NFC device or NFC tag via NFC communications. Other short-range modules may includes a radio frequency identification (RFID) module, a TransferJet module, etc.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An electronics system including:
at least one first near field communication (NFC) device;
a second NFC device capable of storing data; and
a NFC accessory capable of
receiving the data from the second NFC device via NFC communication,
sending the data to the at least one first NFC device via NFC communication, and
deleting the data after sending the data to the at least one first NFC device.

2. The electronics system of Claim 1 wherein the NFC accessory includes:
an elongate housing; and
a NFC transceiver carried by the elongate housing.

3. The electronics system of Claim 2 wherein the elongate housing has a pointed tip so that the NFC accessory defines a stylus.

4. The electronics system of Claim 1 wherein the NFC accessory includes:
a NFC transceiver;
a memory coupled with the NFC transceiver; and
at least one battery coupled with the NFC transceiver.

5. The electronics system of Claim 4 wherein the NFC accessory further includes a switch capable of selectively coupling the at least one battery to the NFC transceiver.

6. The electronics system of Claim 1 wherein the NFC accessory further includes an input device capable of receiving an input for causing the device to delete the data.

7. The electronics system of Claim 1 wherein the NFC accessory includes a timer capable of deleting the data after a timeout period.

8. The electronics system of Claim 1 wherein the at least one first NFC device includes at least one mobile communications device.

9. A NFC accessory including:
a memory;
a NFC transceiver coupled with the memory and capable of communicating with at least one first NFC device and a second NFC device via NFC communication; and
a controller coupled with the memory and the NFC transceiver, the controller being capable of
receiving data from the second NFC device to the memory via NFC communication,
sending the data from the memory to the at least one first NFC device via NFC communication, and
deleting the data from the memory after sending the data to the at least one first NFC device.

10. The NFC accessory of Claim 9 further including an elongate housing carrying said memory and said NFC transceiver.

11. The NFC accessory of Claim 9 further including an input device capable of receiving an input for causing the controller to delete the copied data from the memory.

12. The NFC accessory of Claim 9 further including a timer capable of causing the controller to delete the copied data after a timeout period.

13. A near-field communication (NFC) method for at least one first near field communication (NFC) device and a second NFC device capable of storing data, the method including:
sending the data from the second NFC device to a NFC accessory via NFC communication;
sending the data from the NFC accessory to the at least one first NFC device via NFC communication; and
deleting the data from the NFC accessory after sending the data to the at least one first NFC device.

14. The method of Claim 13 wherein the NFC accessory includes an elongate housing and an NFC transceiver carried by the elongate housing.

15. The method of Claim 13 wherein the NFC accessory includes a NFC transceiver, a memory coupled with the NFC transceiver, and at least one battery coupled with the NFC transceiver.
